# EUROPÄISCHE PATENTANMELDUNG

(11) **EP 0 740 319 A1**
(43) Veröffentlichungstag der Anmeldung: **30.10.1996**
(21) Anmeldenummer: 95106391.6
(22) Anmeldetag: 27.04.1995
(51) Int. Cl.: H01H 31/00, H02B 11/04

(54) **Einrichtung zur Begrenzung von Störlichtbogen auf Geräteeinschüben in Motorschaltschranken**

(71) Anmelder: Licentia Patent-Verwaltungs-GmbH, 60596 Frankfurt (DE)
(72) Erfinder: Krafft, Henning, Dipl. Ing., D-24534 Neumünster (DE); Petersen, Ulrich, Dipl. Ing., D-24229 Dänischenhagen (DE)
(74) Vertreter: Erbacher, Alfons, Dipl.-Ing.

(57) **Zusammenfassung**

Eine einfache und sicher wirkende Einrichtung zur Begrenzung von Störlichtbögen auf Geräteeinschüben in Motorschaltschränken, in denen Einspeisekontakte und Anschlußlaschen für Anschlußleitungen angeordnet sind, wird erfindungsgemäß dadurch erhalten, daß die Anschlußleitungen (9) aus lamellierten Flexbändern aus Kupfer bestehen und direkt hinter den Durchführungen (17) des störlichtbogensicher gekapselten Kontaktträgergergehäuse (1) als Sollbruchstellen dienende Querschnittsminderungen (19,21) aufweisen, derart, daß der Restquerschnitt bei einem Bemessungsstrom und einem betriebsmäßig bedingt begrenzten Kurzschiußstrom noch nicht schmilzt. Durch das Zusammenwirken der störlichtbogensicheren Kapselung des Kontaktträgergehäuses (1) mit der als Sollbruchstelle dienenden Engstelle werden die Lichtbogenzeiten und damit die Schäden durch die Lichtbögen sehr gering gehalten.

## Beschreibung

Die Erfindung betrifft eine Einrichtung zur Begrenzung von Störlichtbögen auf Geräteeinschüben in Motorschaltschränken der im Oberbegriff des Patentanspruchs 1 angegebenen Art.

Innerhalb der Kapselung einer elektrischen Schaltanlage können im Fehlerfall nicht gewünschte Lichtbögen, sogenannte Störlichtbögen, auftreten, die zu großen Zerstörungen innerhalb der Kapselung oder sogar in der gesamten Schaltanlage führen können.

Es wird daher angestrebt, einen derartigen Störlichtbogen räumlich sowie zeitlich zu begrenzen.

Aus der DE-OS 19 08 785 ist eine Vorrichtung zum Schützen eines gekapselten elektrischen Gerätes eines Teiles einer gekapselten Schaltanlage bekannt geworden, bei der im Inneren der gekapselten Anlage wenigstens eine photoelektrische Zelle vorgesehen ist, die beim Empfang von Lichtquanten eine Steuerschaltung für einen Erdungsschalter ansteuert, der den Lichtbogen dadurch zum Erlöschen bringt, daß er die Strecke zwischen dem spannungsführenden Bereich und Erde überbrückt. Die innerhalb der Kapselung einer Schaltanlage angeordneten lichtempfindlichen Elemente sind zur Funktionskontrolle jeweils direkt mit einer Lichtquelle versehen. Der Erfindung liegt die Aufgabe zugrunde, eine Einrichtung zur Begrenzung von Störlichtbögen auf Geräteeinschüben in Motorschaltschränken zu schaffen, die einfach herstellbar ist und bei der die Lichtbogenzeiten und damit die Schäden sehr gering gehalten werden. Diese Aufgabe wird durch die im Patentanspruch 1 gekennzeichneten Merkmale gelöst.

Durch das Zusammenwirken der störlichtbogensicheren Kapselung von aktiven Teilen mit den in den Anschlußleitungen vorhandenen Engstellen werden die Lichtbogenzeiten und damit die Schäden sehr gering gehalten. Der Einsatz von Lichtbogenwächtern, z. B. von Sensoren, ist nicht erforderlich.

Die Engstellen in den Zuleitungen sind im Bereich der Einspeisung angeordnet, wobei alle spannungsführenden Teile zur Einspeisung hin störlichtbogensicher gekapselt sind.

Bei den hohen Stromwerten im Kurzschlußfall wird durch das Zusammenwirken von thermischen und dynamischen Einflüssen eine mechanische Entkopplung der Einspeisung erreicht und damit der Störlichtbogen in kürzester Zeit zum Erlöschen gebracht.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: eine Draufsicht auf einen Kontaktträger, teilweise im Schnitt und
- Figur 2: einen Schnitt durch den Kontaktträger.

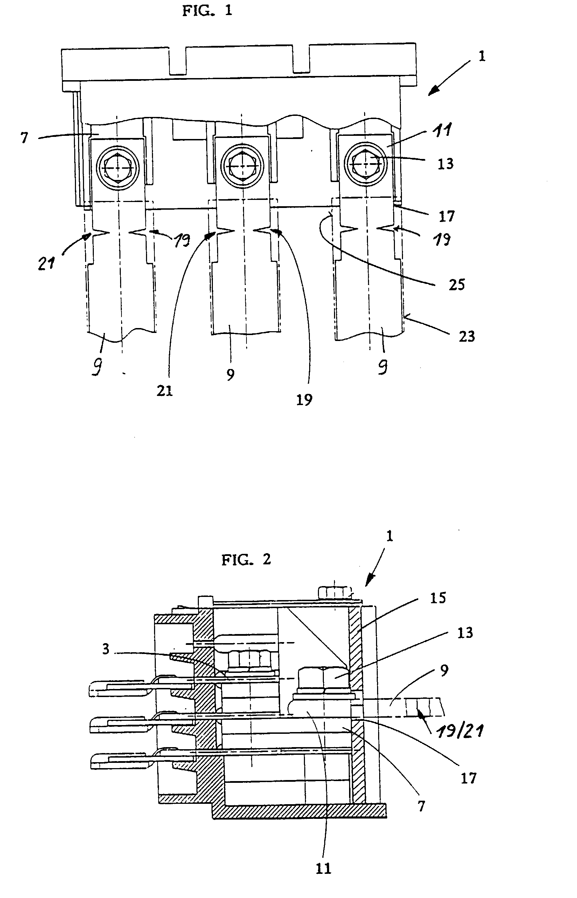

Die Figuren 1 und 2 zeigen ein störlichtbogensicher gekapseltes Kontaktträgergehäuse 1, in dem Einspeisekontakte 3 zum Kontaktieren mit Stromschienen aus dem Kontaktträger herausragen und Anschlußlaschen 7 für Anschlußleitungen 9 angeordnet sind. Die Anschlußleitungen 9 bestehen aus lamellierten Flexbändern aus Kupfer und sind mit ihren Enden 11 über Schrauben 13 mit den Anschlußlaschen 7 fest verbunden. Das Kontaktträgergehäuse 1 weist in einer Seitenwand 15 mehrere Durchführungen 17 auf, aus denen die Anschlußleitungen 9 parallel zueinander herausgeführt werden. Zur Begrenzung von Störlichtbögen auf Geräteeinschüben in Motorschaltschränken weisen die Anschlußleitungen 9 als Sollbruchstellen dienende Querschnittsminderungen auf, die derart ausgebildet sind, daß die Restquerschnitte bei Bemessungsströmen und betriebsmäßig bedingt begrenzten Kurzschlußströmen noch nicht schmelzen. In vorteilhafter Ausgestaltung bestehen die Querschnittsminderungen in den lamellierten Anschlußleitungen 9 aus seitlichen Einkerbungen 19, 21.

In weiterer Ausbildung sind die über die Durchführungen 17 in das Kontaktträgergehäuse 1 hineinführenden Anschlußleitungen 9 von je einer Isolierung 23 umhüllt. Diese Isolierungen 23 reichen mit ihren freien Enden 25 bis in die Durchführungen 17 hinein.

Beim Auftreten eines Störlichtbogens vor dem Schutzorgan treten bei hohen Kurzschlußströmen zwischen den parallel geführten Anschlußleitungen 9 hohe dynamische Kräfte auf, wobei gleichzeitig die durch die Kerben 19, 21 gebildete Engstelle thermisch stark belastet wird. Hierdurch werden dort die Anschlußleitungen 9 weggeschleudert und damit mechanisch entkoppelt. Durch die Anordnung der Einkerbungen 19, 21 in den Anschlußleitungen 9 vor dem Kontaktträgergehäuse 1 und die störlichtbogensichere Durchführung der Anschlußleitungen 9 in das Kontaktträgergehäuse wird ein Verlöschen des Lichtbogens erreicht. Durch das Zusammenwirken der störlichtbogensicheren Kapselung des Kontaktträgergehäuses 1 mit den die Engstelle bildenden Einkerbungen 19, 21 werden die Lichtbogenzeiten und damit die Schäden sehr gering gehalten. Außerdem wird hierdurch der Personenschutz gleichzeitig gesteigert.

## Patentansprüche

1. Einrichtung zur Begrenzung von Störlichtbögen auf Geräteeinschüben in Motorschaltschränken, wobei ein störlichtbogensicher gekapseltes Kontaktträgergehäuse (1) mit Einspeisekontakten (3) und Anschlußlaschen (7) für Anschlußleitungen (9) vorgesehen ist, aus dem mehrere Anschlußleitungen (9) durch Durchführungen (17) parallel zueinander herausgeführt werden, **dadurch gekennzeichnet**, daß die Anschlußleitungen (9) aus lamellierten Flexbändern aus Kupfer bestehen und direkt hinter den Durchführungen (17) als Sollbruchstellen dienende Querschnittsminderungen (19,21) aufweisen, derart, daß der Restquerschnitt bei einem Bemessungsstrom und einem betriebsmäßig bedingt begrenzten Kurzschlußstrom noch nicht schmilzt.

2. Einrichtung nach Anspruch 1, **dadurch gekennzeichnet,** daß die Querschnittsminderungen in den lamellierten Anschlußleitungen (9) aus seitlichen Einkerbungen (19, 21) bestehen.

3. Einrichtung nach Anspruch 1 oder 2, **dadurch gekennzeichnet,** daß das Kontaktträgergehäuse (1) und die Verbindung der Anschlußlaschen (7) mit den Anschlußleitungen (9) störlichtbogensicher gekapselt sind.

4. Einrichtung nach Anspruch 1 oder 2, **dadurch gekennzeichnet,** daß die über die Durchführungen (17) in das Kontaktträgergehäuse (1) hineinführenden Anschlußleitungen (9) von je einer Isolierung (23) umhüllt sind.

5. Einrichtung nach Anspruch4 , **dadurch gekennzeichnet,** daß die Isolierungen (23) mit ihren freien Enden (25) bis in die Durchführungen (17) hineinreichen.
